# EUROPÄISCHE PATENTSCHRIFT

(11) **EP 0 398 008 B1**
(45) Veröffentlichungstag und Bekanntmachung des Hinweises auf die Patenterteilung: **16.06.1993**
(21) Anmeldenummer: 90106485.7
(22) Anmeldetag: 05.04.1990
(51) Int. Cl.: B60G 17/056

(54) **Eingangsseitig mit einem Niveauregelventil verbindbares sowie auch elektrisch ansteuerbares Schaltventil mit den Stellungen Heben, Senken, Fahrt und Stop**
Valve commuting between positions for elevating, lowering, drive and stop which can be connected after a level control valve or controlled electrically
Soupape de commutation entre les positions Montée, Déscente, Route et Stop pouvant être branchée en aval d'une soupape de régulation de niveau ou commandée électriquement

(30) Priorität: 16.05.1989 DE 3915826
(43) Veröffentlichungstag der Anmeldung: 22.11.1990
(73) Patentinhaber: GRAU GMBH, D-69123 Heidelberg (DE)
(72) Erfinder: Blanz, Roland, D-6901 Heiligkreuzsteinach (DE)
(74) Vertreter: Rehberg, Elmar, Dipl.-Ing.

(56) Entgegenhaltungen:
- DE-A- 2 636 766
- DE-C- 3 333 888
- DE-C- 3 445 579

## Beschreibung

Die Erfindung bezieht sich auf ein eingangsseitig mit einem Niveauregelventil verbindbares und elektrisch steuerbares Schaltventil mit den im Oberbegriff des Patentanspruchs 1 angegebenen Merkmalen.

Bei diesem Schaltventil handelt es sich um ein Ventil, welches zum willkürlichen Heben und Senken des Fahrzeugaufbaus eingesetzt wird und in einer Anlage Anwendung findet, in welcher auch ein Niveauregelventil zum selbsttätigen Konstanthalten der Höhe des Fahrgestells eines Fahrzeugs während der Fahrt vorgesehen ist. Das Schaltventil soll auch zu Be- und Entladungsvorgängen heranziehbar sein.

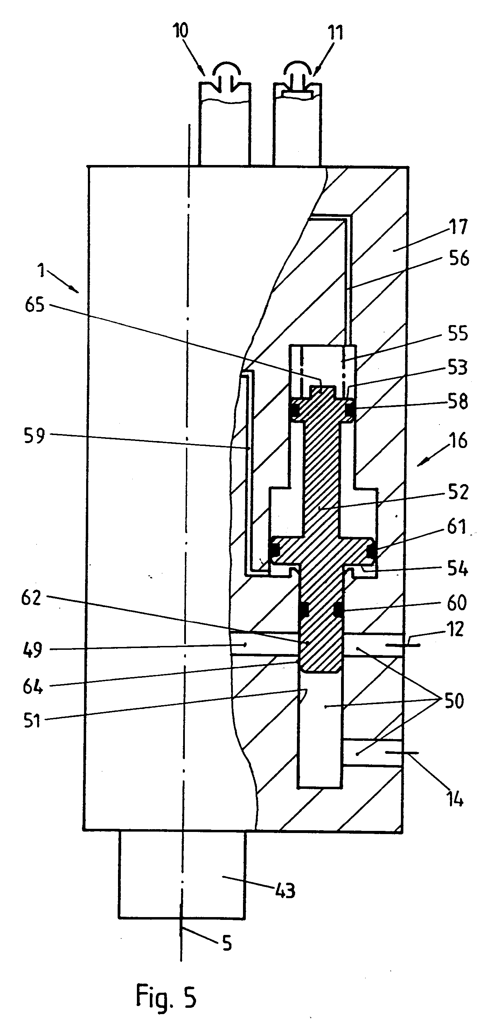

Die DE-C-34 45 579 zeigt eine Steueranlage zum Heben und Senken des Fahrzeugaufbaus von luftgefederten Fahrzeugen und in Verbindung auch ein Schaltventil der eingangs beschriebenen Art. Dieses Schaltventil wird in der Regel in Verbindung mit zwei Niveauregelventilen eingesetzt. Figur 5 zeigt jedoch bereits eine Ausführungsform, bei der nur ein einziges Niveauregelventil Verwendung findet. Von dem Niveauregelventil führen zwei Steuerleitungen zum Schaltventil, über die das Schaltventil in der Stellung Fahrt von dem Niveauregelventil gesteuert wird.

Das Schaltventil ist bezüglich der Stellung Fahrt zweikreisig ausgebildet, d. h. es besteht am Schaltventil keine Verbindungsleitung zwischen den beiden der linken und der rechten Fahrzeugseite zugeordneten Kreisen. Sofern bei dieser Anlage ein Niveauregelventil eingesetzt wird, welches eine Querdrossel aufweist, stehen die beiden Luftfederkreise nur über diese Querdrossel in der Stellung Fahrt miteinander in Verbindung. Die DE-C-34 45 579 beschäftigt sich jedoch nicht mit der Problematik einer Querdrosselung, die ohnehin nur dann auftritt, wenn in der Anlage für die linke und rechte Fahrzeugseite nur ein Niveauregelventil, etwa an neutraler Stellung des Fahrzeugs eingesetzt wird.

Für das willkürliche Heben und Senken ist ein Einlaßventil und ein Auslaßventil vorgesehen, über welches die gemeinsame Be- und Entlüftung der Luftfederbälge erfolgt. Die nach Art von Schiebern ausgebildeten Ventilkörper des Schaltventils sind über zwei Schaltkolben, deren Wirkflächen über zwei Magnetventile beaufschlagt sind, in Verbindung mit einer Rückführfeder auf die vier Funktionsstellungen Heben, Senken, Fahrt und Stop verstellbar, wobei je nach dem Ansteuern der Magnetventile eine der vier Stellungen eingenommen wird.

Die zweikreisige Ausbildung des Schaltventils in der Stellung Fahrt, insbesondere in Verbindung mit zwei Niveauregelventilen, ist aufwendig und teuer. Es sind zumindest zwei Steuerleitungen zwischen Niveauregelventil und Schaltventil erforderlich. Wenn zwei Niveauregelventile oder ein Niveauregelventil ohne Querdrossel Verwendung finden und der eine Luftfederkreis der einen Fahrzeugseite und der andere Luftfederkreis der anderen Fahrzeugseite zugeordnet sind, führen die bei Kurvenfahrt notwendigerweise entstehenden Wankausschläge des Fahrzeugaufbaus dazu, daß der eine Luftfederkreis über das diesem zugeordnete Niveauregelventil entlüftet und der andere Luftfederkreis über das andere Niveauregelventil belüftet wird. Nach Beendigung der Kurvenfahrt kehren sich die Verhältnisse um. Hieraus resultiert ein unnötiger Luftverbrauch.

Bei Verwendung von nur einem Niveauregelventil ohne Querdrosselung entstehen gefährlich große Wankausschläge des Fahrzeugaufbaus. Durch die Anwendung eines Niveauregelventils mit Querdrosselung wird dieser Gefahr begegnet. Die Querdrossel ist im Niveauregelventil, und zwar an der Verbindungsstelle der beiden Leitungen, angeordnet.

Aus der DE-C-33 33 888 ist es für Niveauregelventile zum selbsttätigen Konstanthalten der Fahrgestellhöhe eines Fahrzeugs bereits bekannt, den einen zu den Luftfederbälgen der linken Fahrzeugseite führenden Kreis mit dem anderen zu den Luftfederbälgen der rechten Fahrzeugseite führenden Kreis über das Niveauregelventil miteinander zu verbinden und in diese Verbindungsleitung eine Querdrossel einzuschalten, so daß bei Kurvenfahrt das Verschieben von Druckluft aus dem einen Luftfederbalg in den anderen Luftfederbalg behindert und auf diese Art und Weise den Wankbewegungen des Fahrzeugaufbaus während und nach der Kurvenfahrt entgegengewirkt wird. Unmittelbar nach der Kurvenfahrt kehrt sich die Flußrichtung des Luftaustauschs zwischen den beiden Kreisen um. Auch hier erweist sich die Querdrossel als günstig, um die Wankbewegungen kleinzuhalten.

Mit einem solchen Niveauregelventil ist es allerdings nicht möglich, den Fahrzeugaufbau gegenüber dem Fahrgestell willkürlich abzusenken oder anzuheben, wie dies beispielsweise bei Wechselladeeinrichtungen, bei Beladungsvorgängen an Rampen o. dgl. wünschenswert bzw. erforderlich ist. Bei dem bekannten Niveauregelventil mit Querdrossel wird die Drosselfunktion durch eine Ringspaltbildung zwischen einem verdickten Teil und einer entsprechenden Bohrung erreicht, wobei sich an die Verdickung beidseitig eine Ausnehmung anschließt, so daß die Drosselfunktion nur bei kleinen Steuerauslenkungen erhalten bleibt, während bei großen Steuerauslenkungen, wie sie beispielsweise beim Abheben oder schlagartigen Absetzen eines Containers auf einem Fahrgestell vorkommen, eine ungedrosselte Be- und Entlüftung der beiden Luftfederkreise über das Niveauregelventil stattfindet.

Der Erfindung liegt die Aufgabe zugrunde, ein Schaltventil der eingangs beschriebenen Art, welches also auch das willkürliche Heben und Senken eines Fahrzeugaufbaus ermöglicht, baulich einfacher auszubilden und einerseits ein schnelles, willkürliches Heben und Senken des Fahrzeugaufbaus zu ermöglichen und andererseits einer Wankbewegung des Fahrzeugaufbaus bei Kurvenfahrt entgegenzuwirken.

Erfindungsgemäß wird dies durch die im kennzeichnenden Teil des Patentanspruchs 1 aufgeführten Merkmale in Verbindung mit den Merkmalen des Oberbegriffs erreicht.

Dadurch, daß das Schaltventil bezüglich der Stellung Fahrt nicht mehr zweikreisig, sondern nur einkreisig ausgebildet ist, vereinfacht sich der bauliche Aufwand des Schaltventils. Das Gehäuse des Schaltventils weist nur noch einen eingangsseitigen Stutzen auf, an den im Rahmen einer Anlage nur ein einziges Niveauregelventil angeschlossen wird, wobei nicht nur der Aufwand an Niveauregelventilen innerhalb der Anlage reduziert wird, sondern auch die doppelte Anordnung der Steuerleitung zwischen Niveauregelventl und Schaltventil entfällt.

Trotzdem wird den Wankbewegungen des Fahrzeugaufbaus in und nach der Kurvenfahrt durch die Querdrossel entgegengewirkt, die nun nicht mehr im Niveauregelventil vorgesehen, sondern im Gehäuse des Schaltventils integriert angeordnet ist. Dabei ist es wichtig, daß die Drosselfunktion der Querdrossel in der Stellung Fahrt wirksam ist, während das ungedrosselte Belüften in der Stellung Heben und das ungedrosselte Entlüften in der Stellung Senken in beiden Luftfederkreisen ermöglicht, und damit, wie gewünscht und erforderlich, möglichst schnell durchführbar ist. Ob die Drosselfunktion in der Stellung Stop gegeben ist oder nicht, ist von untergeordneter Bedeutung, da die wesentlichen Leitungsverbindungen hierbei ohnehin gegenseitig abgesperrt sind. Bei einem schaltbaren Drosselventil kann es von Vorteil sein, wenn die Wirkung der Querdrossel auch in der Stellung Stop ausgeschaltet ist.

Das neue Schaltventil kann in Verbindungmit einem Niveauregelventil eingesetzt werden, welches selbst mit oder ohne Querdrossel ausgebildet ist. Eine Querdrossel ist dort jedenfalls an sich nicht erforderlich.

Die vorliegende Erfindung läßt sich unabhängig davon verwirklichen, ob das Schaltventil nach Schieber- und/oder Ventilbauart ausgebildet ist. Wichtig ist, daß die Querdrossel im Schaltventil und in einer Verbindungsleitung zwischen den beiden Anschlußstutzen für die Luftfederbälge vorgesehen ist, wobei die Drosselfunktion in der Stellung Fahrt wirksam ist, in den Stellungen Heben und Senken dagegen nicht.

Das Drosselventil kann zwischen einer gemeinsamen Zuleitung über das Absperrventil und der Verbindungsleitung zwischen den beiden Anschlußstutzen für die Luftfederbälge angeordnet sein. Das Absperrventil sitzt in dem Leitungszweig, über den das Niveauregelventil an das Schaltventil angeschlossen ist. In der Stellung Stop ist diese Verbindung über das geschlossene Absperrventil abgesperrt, ebenso in den Stellungen Heben und Senken, während in der Stellung Fahrt die Verbindung zu dem Niveauregelventil offen ist.

Die Querdrossel kann einen in einer Bohrung des Gehäuses des Schaltventils verschiebbaren Stellkolben aufweisen, der zwischen einer ersten Position mit Drosselfunktion in der Stellung Fahrt und einer zweiten Position ohne Drosselfunktion in den Stellungen Heben und Senken hin- und herbeweglich gesteuert vorgesehen ist. Damit wird die Drosselfunktion in der zweiten Position ausgeschaltet und ist nur in der ersten Position vorhanden. Durch die Zuordnung der ersten Position zu der Stellung Fahrt ist diese Drosselfunktion gewollt nur in dieser Stellung gegeben, so daß das willkürliche Heben und Senken des Fahrzeugaufbaus in keiner Weise durch die Anordnung der Querdrossel behindert wird.

Der Stellkolben kann zwei gegenläufig beaufschlagbare Wirkflächen aufweisen, von denen die eine über das eine Magnetventil und die andere über das andere Magnetventil beaufschlagbar sind; die beiden Wirkflächen sind dann entweder unterschiedlich groß ausgebildet, oder bei gleich großer Ausbildung ist zusätzlich eine den Stellkolben belastende Stellfeder vorgesehen. Damit ist hier sichergestellt, daß bei der Erregung beider Magnetventile der Stellkolben nicht eine undefinierte Zwischenstellung einnimmt, sondern die gleichzeitige Druckbeaufschlagung beider Wirkflächen dazu führt, daß der Stellkolben eindeutig in die eine der beiden Positionen verfahren wird, in der die Drosselfunktion aufgehoben ist.

In der Stellung Fahrt wird nur eine der beiden Wirkflächen beaufschlagt, wobei die Anordnung dabei so getroffen ist, daß der Stellkolben in die erste Position mit Drosselfunktion verfahren wird. Sofern eine zusätzliche Stellfeder vorgesehen ist, muß deren Kraft auf die über die beiden Wirkflächen auf den Stellkolben einwirkenden Kräfte abgestimmt werden, damit auch bei Beaufschlagung beider Wirkflächen die Kraft der Feder für ein Verfahren des Stellkolbens in die zweite Position ohne Drosselfunktion möglich wird.

Die Querdrossel kann am Stellkolben nach Schieberbauart verwirklicht sein und eine mit Spiel in der Bohrung verschiebbare Verdickung für die Drosselfunktion in der ersten Position aufweisen, an die sich eine Ausnehmung für die Aufhebung der Drosselfunktion in der anderen Position anschließt. Damit wird das willkürliche Be- und Entlüften in den Stellungen Heben und Senken und der entsprechende Luftdurchgang durch das Schaltventil frei möglich, wie es z.B. im Containerbetrieb erforderlich ist.

Es ist aber auch möglich, daß die Querdrossel am Stellkolben nach Ventilbauart als Drosselbohrung ausgebildet ist, über die in der Stellung Fahrt die beiden Anschlußstutzen für die Luftfederbälge miteinander verbunden sind, wobei zwischen dem Stellkolben und einem Gehäuserand ein Durchlaßventil gebildet ist. Dieses Durchlaßventil ist in der Stellung Fahrt geschlossen, so daß ein Luftaustausch zwischen den beiden Luftfederkreisen nur über die Drosselbohrung als Querdrossel möglich ist, während in den Stellungen Heben und Senken das Durchlaßventil offen ist und damit die zu den beiden Luftfederbälgen der Kreise führenden Leitungen über das geöffnete Durchlaßventil mit seinem großen Querschnitt ungedrosselt in Verbindung stehen.

Die Erfindung wird anhand bevorzugter Ausführungsbeispiele weiter erläutert und beschrieben. Es zeigen:
- Figur 1: ein Schaltungsschema der wesentlichen Teile einer Anlage mit einem Schaltventil und einem vorgeschalteten Niveauregelventil,
- Figur 2: einen schematisierten Querschnitt durch das Schaltventil in einer ersten Ausführungsform mit integrierter Querdrossel, in der Stellung Fahrt,
- Figur 3: eine andere Ausführungsform der Querdrossel,
- Figur 4: eine dritte Ausführungsform der Querdrossel,
- Figur 5: eine weitere Ausführungsform der Querdrossel und
- Figur 6: ein weiteres Schaltventil mit der Querdrossel.

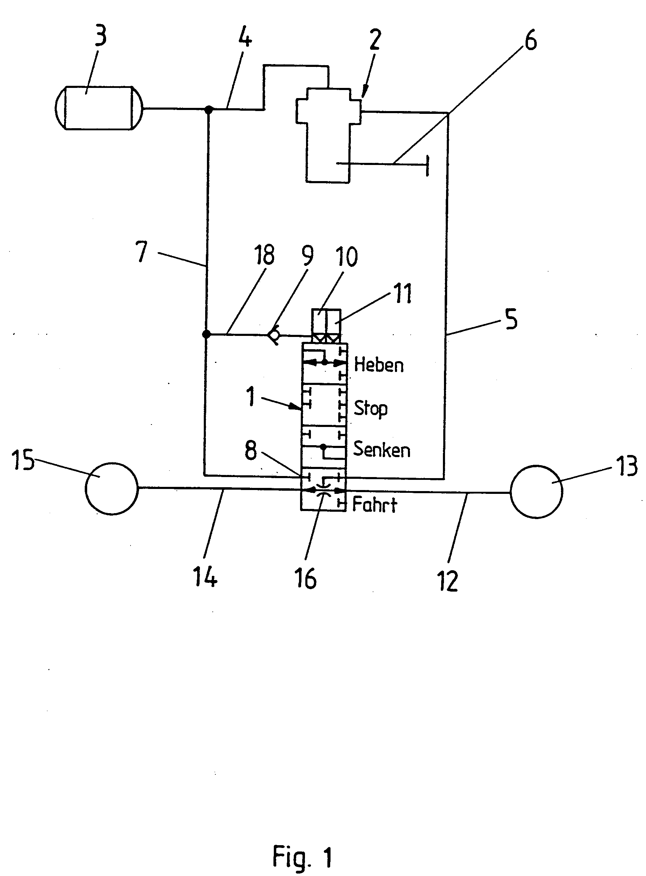

In Figur 1 ist das Schaltventil 1 symbolhaft mit seinen vier Stellungen für Heben, Senken, Fahrt und Stop dargestellt. Dem Schaltventil 1 ist ein einziges Niveauregelventil 2 vorgeschaltet. Über eine nicht dargestellte Druckluftquelle wird ein Druckluftvorratsbehälter 3 aufgefüllt, von dem eine Leitung 4 zu dem Gehäuse des Niveauregelventils 2 und vor dessen Einlaßsitz führt. Eine Steuerleitung 5 verbindet das Niveauregelventil 2 mit dem Schaltventil 1. Das Niveauregelventil 2 kann in üblicher Weise durch einen Hebel 6 mechanisch gesteuert werden. Über eine Versorgungsleitung 7 steht Druckluft aus dem Druckluftvorratsbehälter 3 an dem Schaltventil 1 an, und zwar einerseits direkt an einem Vorratsanschluß 8 und andererseits über ein Rückschlagventil 9 vor zwei Magnetventilen 10 und 11 am Schaltventil 1.

Von dem Gehäuse des Schaltventils 1 führt eine erste Leitung 12 zu einem oder mehreren Luftfederbälgen 13, die der rechten Fahrzeugseite zugeordnet sein mögen. Analog ist eine Leitung 14 vorgesehen, die zu einem oder mehreren Luftfederbälgen 15 auf der linken Fahrzeugseite führen möge. Anhand des Sinnbilds des Schaltventils 1 und der untersten Stellung Fahrt ist bereits erkennbar, daß in dieser Stellung Fahrt die Leitungen 12 und 14 der beiden Luftfederkreise über eine Querdrossel 16 miteinander in Verbindung stehen.

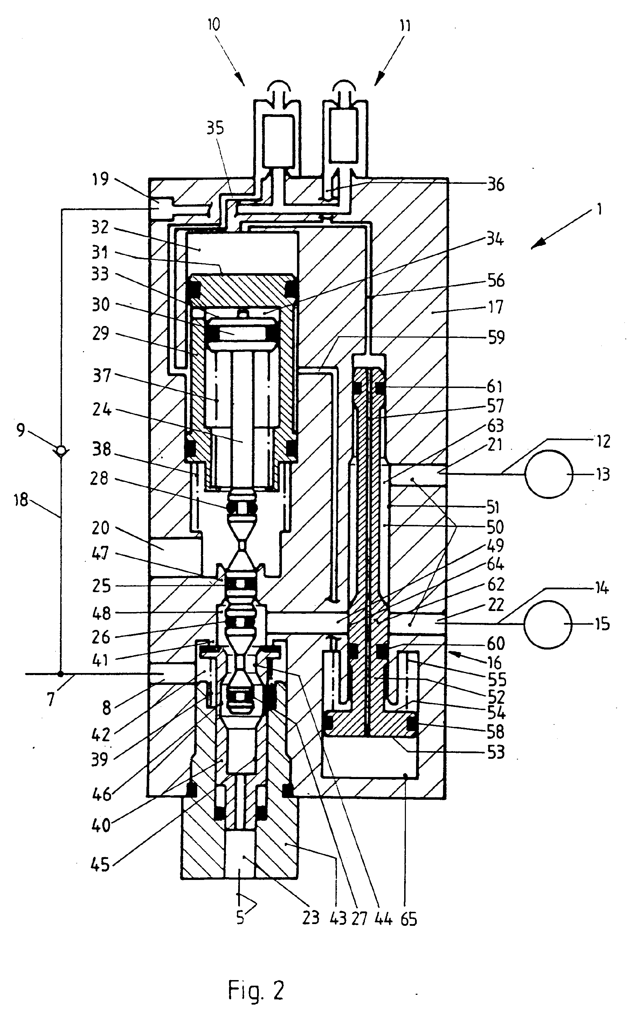

Figur 2 zeigt einen schematisierten Querschnitt durch das Schaltventil 1. Das Schaltventil 1 weist ein Gehäuse 17 auf, an dem über den Vorratsanschluß 8 die Versorgungsleitung 7 angeschlossen ist. Von der Versorgungsleitung 7 ist eine Leitung 18 abgezweigt in welcher das Rückschlagventil 9 angeordnet ist und über die die Magnetventile 10 und 11 über einen Anschluß 19 mit Druckluft versorgt werden.

Es versteht sich, daß das Rückschlagventil 9 wie auch die Leitung 18 auch innerhalb des Gehäuses 17 des Schaltventils 1 vorgesehen sein könnten.

Am Gehäuse 17 des Schaltventils 1 ist ferner ein druckloser Auslaß 20 als Entlüftungsöffnung vorgesehen. An einem ersten Anschlußstutzen 21 ist die Leitung 12 angeschlossen, die zu dem Luftfederbalg 13 der rechten Fahrzeugseite führt. Die Leitung 14 zu dem Luftfederbalg 15 der linken Fahrzeugseite ist an einem Anschlußstutzen 22 angebracht. Die Steuerleitung 5, die von dem Niveauregelventil 2 herangeführt ist, endet an einem Stutzen 23 am Gehäuse 17 des Schaltventils 1.

In dem Gehäuse 17 des Schaltventils 1 ist eine Schaltstange 24 mit Dichtungen 25, 26, 27 und 28 gleitend und dichtend gelagert uns wie dargestellt ausgebildet, wobei hierdurch in Verbindung mit der Gehäuseausbildung verschiedene Ventile gebildet werden. Für die Verschiebung der Schaltstange 24 in vier Stellungen, die den Steuerstellungen Heben, Senken, Fahrt und Stop zugeordnet sind, sind zwei Schaltkolben 29 und 30 in der gezeigten Weise vorgesehen, wobei der Schaltkolben 29 eine Wirkfläche 31 im Anschluß an einen Steuerraum 32 und der Schaltkolben 30 eine Wirkfläche 33 im Anschluß an einen Steuerraum 34 aufweisen.

Von dem Magnetventil 10 führt eine Leitung 35 zu dem Steuerraum 34, während von dem Magnetventil 11 eine Leitung 36 zum Steuerraum 32 führt. Die Anordnung der beiden Schaltkolben 29 und 30 steht unter der Wirkung von zwei Rückführfedern 37 und 38. Außerdem sind die durch Anschläge begrenzten Hübe der beiden Schaltkolben 29 und 30 unterschiedlich, so daß in Verbindung mit den Rückführfedern 37 und 38 sowie der möglichen wahlweisen oder gemeinsamen Beaufschlagung der Steuerräume 32 und 34 die Schaltstange 24 in insgesamt vier Positionen verschiebbar ist, die den Stellungen Heben, Senken, Fahrt und Stop zugeordnet sind.

In Zuordnung zu der Schaltstange 24 ist im Gehäuse 17 ein auf einer Feder 39 abgestützter Doppelventilkörper 40 vorgesehen, der in Verbindung mit einem eingezogenen Rand 41 am Gehäuse 17 ein Einlaßventil 40, 41 bildet und eine Vorratskammer 42 abschließt, die in dauernder Verbindung mit der Versorgungsleitung 7 steht. Über einen Schraubstutzen 43, in welchem der Doppelventilkörper 40 dichtend verschiebbar gelagert ist und der den Stutzen 23 trägt, ist die Steuerleitung 5 angeschlossen. Der Doppelventilkörper 40 weist zwei auf die Durchmesser der Dichtungen 26 und 27 abgestimmte Engstellen 44 und 45 auf, zwischen denen sich eine Erweiterung 46 befindet.

Zwischen der Dichtung 27 und der Engstelle 44 ist ein Absperrventil 27, 44 gebildet, welches in der Stellung Stop geschlossen ist, während es in der in Figur 2 dargestellten Stellung Fahrt, also bei allein erregtem Magnetventil 11, geöffnet ist. Außer dem Einlaßventil 40, 41 und dem Absperrventil 27, 44 ist eine Bohrung 47 vorgesehen, die in Verbindung mit den Dichtungen 25, 26 und 28 ein Auslaßventil 25, 26, 28, 47 bildet. Im Gehäuse 17 ist ein Raum 48 vorgesehen, der in ständiger Verbindung mit einer gemeinsamen Zuleitung 49 steht, die zu einer Verbindungsleitung 50 führt, in der die Querdrossel 16 angeordnet ist.

Die Querdrossel 16 ist hier in Schieberbauart verwirklicht und weist einen in einer Bohrung 51 verschiebbaren Stellkolben 52 auf. Der Stellkolben 52 besitzt zwei gegenläufig beaufschlagbare Wirkflächen 53 und 54, die im vorliegenden Fall gleich groß ausgebildet sind. Eine Stellfeder 55, die auf der einen oder auch auf der anderen Seite des Stellkolbens 52 angeordnet sein kann, schafft eindeutige Verhältnisse, wenn die beiden gleich großen Wirkflächen 53 und 54 mit Druck beaufschlagt werden. Vom Magnetventil 11 führt eine Leitung 56, die von dem Steuerraum 32 abzweigt bzw. mit diesem in Verbindung steht, über einen Kanal 57 in dem Stellkolben 52 zu der Wirkfläche 53. Die auf der anderen Seite einer Dichtung 58 vorgesehene Wirkfläche 54 wird über eine Leitung 59 beaufschlagt, die mit dem Steuerraum 34 bzw. der Leitung 35 in Verbindung steht.

Der Stellkolben 52 trägt zwei weitere Dichtungen 60 und 61, mit denen er innerhalb der gestuften Bohrung 51 dichtend und gleitend verschiebbar ist. Eine Verdickung 62 und eine Ausnehmung 63 sind im Bereich des Stellkolbens 52 in der dargestellten Verteilung vorgesehen. Zwischen der Verdickung 62 und dem entsprechenden Durchmesser der Bohrung 51 ist Spiel vorgesehen bzw. ein Drosselspalt 64 gebildet, der in der Verbindungsleitung 50 wirksam ist und die Querdrossel 16 bildet, die nur in der in Figur 2 dargestellten Stellung Fahrt wirkt.

Es ist erkennbar, daß der Stellkolben 52 der Querdrossel 16 aus der dargestellten ersten Position mit Drosselwirkung in die andere Position verschiebbar ist, in welcher die Wirkfläche 53 an einem Anschlag 65 am Gehäuse 17 anliegt, wobei die Verdickung 62 aus ihrer Stellung zwischen den Teilen der Verbindungsleitung 50 und im Anschluß an die Zuleitung 49 herausgefahren ist, so daß die Luftfederbälge 13 und 15 über die Verbindungsleitung 50 in ungedrosselter Verbindung zueinander und zu der Zuleitung 49 stehen und über vergleichsweise große Querschnitte schnell be- oder entlüftet werden können.

Das Schaltventil 1 gemäß Figur 2 wird nach folgendem Steuerschema betrieben: In der dargestellten Stellung Fahrt ist lediglich der Magnet des Magnetventils 11 erregt. Druckluft aus dem Druckluftvorratsbehälter 3 gelangt in den Steuerraum 32 und damit auf die Wirkfläche 31 des Schaltkolbens 29, so daß die Anordnung der Schaltkolben 29 und 30 in der dargestellten Weise verfahren wird, bei welcher das Einlaßventil 40, 41 und das Auslaßventil 25, 47 geschlossen sind, während das Absperrventil 27, 44 geöffnet ist. Da über die Leitung 56 lediglich die Wirkfläche 53 des Stellkolbens 52 mit Druck beaufschlagt wird und die Stellfeder 55 so ausgelegt ist, daß der Stellkolben 52 in seine die dargestellte Position verfährt, ist die Querdrossel 16 in Wirkung. Dabei wird die Fahrgestellhöhe über das Niveauregelventil 2 konstantgehalten und bei Kurvenfahrt verhindert die wirksame Querdrossel 16 allzu große Wankausschläge.

In der Stellung Stop sind beide Magnetventile 10 und 11 nicht angesteuert, so daß die Schaltstange 24 unter dem Einfluß der Rückführfedern 37 und 38 in ihre oberste Stellung fährt, in welcher das Einlaßventil 40, 41, das Auslaßventil 26, 47 und das Absperrventil 27, 44 geschlossen sind. Infolgedessen werden auch die Wirkflächen 53 und 54 nicht mit Druckluft beaufschlagt und die Kraft der Stellfeder 55 reicht aus, um den Stellkolben 52 in seine andere Position zu verschieben, in der die Drosselwirkung in der Verbindungsleitung 50 aufgehoben ist, was jedoch in dieser Stellung ohne Bedeutung ist.

In der Stellung Senken wird allein das Magnetventil 10 angesteuert, so daß nur der Steuerraum 34 des Schaltkolbens 30 beaufschlagt wird. Hierdurch wird das Auslaßventil 25, 47 geöffnet, während das Einlaßventil 40, 41 geschlossen bleibt und auch das Absperrventil 26, 44 geschlossen ist. Durch die auch über die Leitung 59 auf der Wirkfläche 54 anstehende Druckluft wird der Stellkolben 52, falls er nicht ohnehin vorher durch die Kraft der Stellfeder 55 in die andere Stellung verschoben worden ist, so verschoben bzw. gehalten, daß die Wirkfläche 53 an dem Anschlag 65 zur Anlage kommt, womit die Wirkung der Querdrossel 16 ausgeschaltet ist, so daß Druckluft über große Querschnitte aus den Luftfederbälgen 13 und 15 letztlich über den Auslaß 20 in die Atmosphäre abgelassen und der Fahrzeugaufbau schnell gesenkt werden kann.

In der Stellung Heben sind beide Magnetventile 10 und 11 gleichzeitig angesteuert, wodurch sich eine Addition der unterschiedlichen Hübe der beiden Schaltkolben 29 und 30 zum Maximalhub ergibt. In diesem Fall ist das Durchlaßventil 26, 44 bzw. 27, 45 geschlossen. Auch das Auslaßventil 28, 47 ist geschlossen, während die Schaltstange 24 bei ihrer Abwärtsbewegung den Doppelventilkörper 40 unter Öffnen des Einlaßventils 40, 41 mitgenommen hat.

Damit kann Druckluft aus der Versorgungsleitung 7 bzw. der Vorratskammer 42 zum Heben des Fahrzeugaufbaus über das geöffnete Einlaßventil 40, 41 in den Raum 48 und von dort über die Zuleitung 49 ungedrosselt in die Verbindungsleitung 50 und damit letztendlich zu den Luftfederbälgen 13 und 15 gelangen. Da über die Leitungen 56 und 59 in diesem Fall beide Wirkflächen 53 und 54 mit identischer Kraft beaufschlagt sind, kann sich die Kraft der Stellfeder 55 auch hier auswirken, um den Stellkolben 52 in die Position zu verschieben, in der die Querdrossel 16 außer Funktion ist.

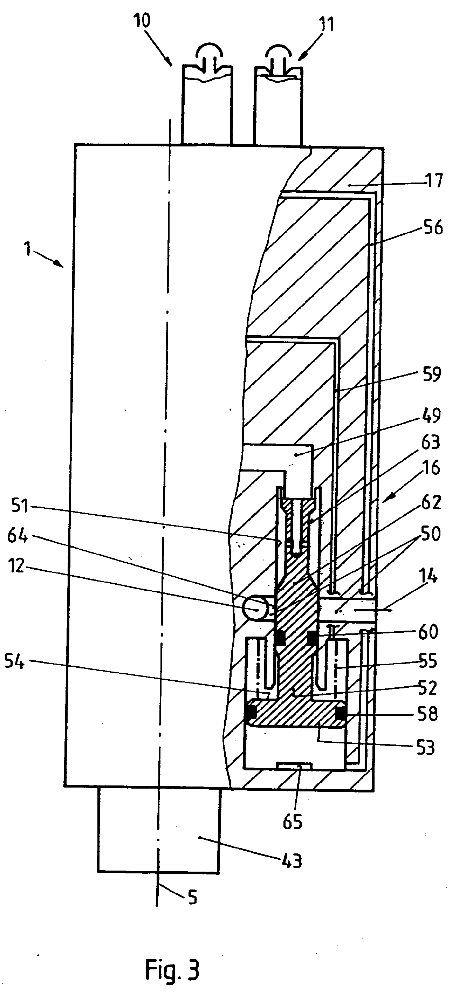

Figur 3 verdeutlicht eine weitere Ausführungsmöglichkeit der Querdrossel 16, wobei die übrige Ausbildung des Schaltventils 1, insbesondere mit seiner Schaltstange 24, gegenüber der Ausführungsform gemäß Figur 2 unverändert ist.

Die Querdrossel 16 weist als wesentliches Element auch hier einen Stellkolben 52 mit seinen beiden Wirkflächen 53 und 54 auf, die über die Leitungen 56 bzw. 59 beaufschlagbar sind. Auch hier ist die Stellung Fahrt dargestellt, d. h. das Magnetventil 11 ist erregt, das Magnetventil 10 dagegen nicht. Infolgedessen ist die Wirkfläche 53 des Stellkolbens 52 beaufschlagt und die Stellfeder 55 zusammengedrückt. Die Zuleitung 49 ist am anderen Ende des Stellkolbens 52 angeschlossen. Der Stellkolben 52 weist auch hier eine Verdickung 62 auf, die mit der Bohrung 51 den Drosselspalt 64 bildet. In radialer Richtung schließen an den Drosselspalt 64 die Verbindungsleitung 50 und sodann auf gleicher axialer Höhe die Leitungen 12 und 14 an.

Infolgedessen ist in der Stellung Fahrt ein Austausch von Luft über die Leitungen 12 und 14 nur über die eingeschaltete Querdrossel 16, also mit Querdrosselung, möglich. Im Anschluß an die Verdickung 62 besitzt auch hier der Stellkolben 52 eine Ausnehmung 63, die den Durchgang in der Verbindungsleitung 50 in den Stellungen Heben und Senken vergrößert, so daß hier die Druckluft ungedrosselt zu- bzw. abgeleitet werden kann.

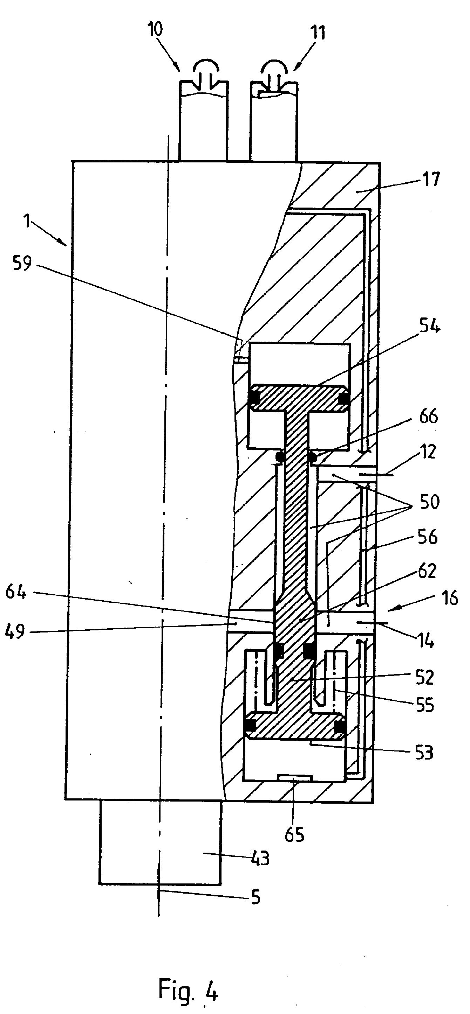

Die Figuren 4 und 5 verdeutlichen weitere konstruktive Ausführungsmöglichkeiten der Querdrossel 16. Gemäß Figur 4 sind die Wirkflächen 53 und 54 an den entgegengesetzten Enden des Stellkolbens 52 vorgesehen, wobei die Leitungen 56 und 59 entsprechend angeschlossen sind. Eine Dichtung 66 verhindert die Beaufschlagung der Rückseite des Kolbens mit der Wirkfläche 54.

Bei der Ausführungsform gemäß Figur 5 sind die Wirkflächen 53 und 54 nochmals anders angeordnet, wobei die Stellfeder 55 die Wirkfläche 53 beaufschlagt. Die Abstimmung der Kräfte muß entsprechend vorgenommen werden. Der Stellkolben 52 weist hier die Verdickung 62 an seinem unteren Ende auf, so daß dort der Drosselspalt 64 in Verbindung mit der Bohrung 51 gebildet ist. Trotz der unterschiedlichen konstruktiven Ausführungsform wird auch hier die gleiche Funktion der Querdrossel 16 erreicht, wie sie bereits anhand der Figur 2 ausführlich beschrieben wurde.

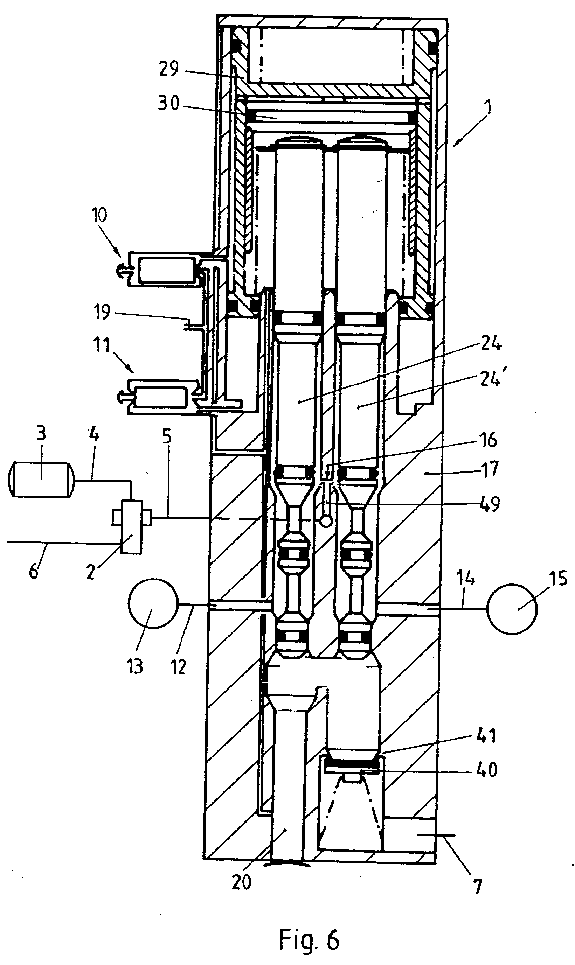

Figur 6 zeigt eine Ausführungsform des Schaltventils 1, wie es ähnlich in Figur 2 der DE-PS 34 24 670 beschrieben ist, jedoch mit dem Unterschied, daß das Schaltventil bezüglich der Stellung Fahrt nur einkreisig ausgebildet ist; es ist daher nur ein Niveauregelventil 2 vorgesehen und an das Schaltventil angeschlossen. Im Gehäuse 17 sind hier parallel zueinander und gemeinsam betätigbar zwei Schaltstangen 24 und 24′ vorgesehen und im einzelnen in der dargestellten Weise ausgebildet und angeordnet. Die beiden Schaltstangen 24 und 24′ sind jeweils gemeinsam über die Schaltkolben 29 und 30 betätigbar, und zwar wiederum über die beiden Magnetventile 10 und 11.

Es ist ein gemeinsames Einlaßventil 40, 41 und auch ein gemeinsamer Auslaß 20 vorgesehen. Die Querdrossel 16 besteht hier aus einer entsprechend kalibrierten Bohrung im Anschluß an die Zuleitung 49, die über die Steuerleitung 5 in dauernder Verbindung mit dem einzigen Niveauregelventil 2 steht. In Figur 6 ist ebenfalls die Stellung Fahrt dargestellt. Man erkennt, daß jeglicher Luftaustausch zwischen den Luftfederbälgen 13 und 15 der rechten bzw. linken Fahrzeugseite nur über die kalibrierte Bohrung der Querdrossel 16 möglich ist, während in den Stellungen Heben und Senken die Luftzufuhr über die Versorgungsleitung 7 und das geöffnete Einlaßventil 40, 41 bzw. die Luftabfuhr über den Auslaß 20 ungedrosselt erfolgen können.

## Patentansprüche

1. Eingangsseitig mit einem Niveauregelventil (2) verbindbares und elektrisch steuerbares Schaltventil (1) mit den Stellungen Heben, Senken, Fahrt und Stop, das an einem Gehäuse (17) einen Vorratsanschluß (8) für eine Druckluftquelle, einen drucklosen Auslaß (20) und mindestens zwei Anschlußstutzen (21; 22) für die Verbindung zu Luftfederbälgen (13; 15) aufweist, wobei im Gehäuse nach Schieber- und/oder Ventilbauart ein Einlaßventil (40, 41), ein Auslaßventil (25, 47) und ein Absperrventil (27, 44) für die Verbindung bzw. Trennung der Leitungsführungen in den vier Stellungen vorgesehen sind, deren Ventilkörper über zwei Schaltkolben (29, 30) und zwei diesen vorgeschaltete Magnetventile (10, 11) in die vier Stellungen schaltbar ist bzw. sind, wobei der eine Anschlußstutzen (21) mit einem oder mehreren Luftfederbälgen der linken Fahrzeugseite und der andere Anschlußstutzen (22) mit einem oder mehreren Luftfederbälgen der rechten Fahrzeugseite verbindbar ist, dadurch gekennzeichnet, daß das Schaltventil (1) bezüglich der Stellung Fahrt einkreisig ausgebildet ist, und daß im Gehäuse (17) des Schaltventils (1) in einer Verbindungsleitung (50) zwischen den beiden Anschlußstutzen (21; 22) für die Luftfederbälge (13; 15) eine feste oder schaltbare Querdrossel (16) vorgesehen ist, deren Drosselfunktion in der Stellung Fahrt, ggf. zusätzlich in der Stellung Stop, wirksam ist.

2. Schaltventil nach Anspruch 1, dadurch gekennzeichnet, daß die Querdrossel (16) zwischen einer gemeinsamen Zuleitung (49) über das Absperrventil (25, 26, 28, 47) und der Verbindungsleitung (50) zwischen den beiden Anschlußstutzen (21, 22) für die Luftfederbälge (13, 15) angeordnet ist.

3. Schaltventil nach Anspruch 1 und 2, dadurch gekennzeichnet, daß die Querdrossel (16) einen in einer Bohrung (51) des Gehäuses (17) des Schaltventils (1) verschiebbaren Stellkolben (52) aufweist, der zwischen einer ersten Position mit Drosselfunktion in der Stellung Fahrt und einer zweiten Position ohne Drosselfunktion in den Stellungen Heben und Senken hin- und herbeweglich gesteuert vorgesehen ist.

4. Schaltventil nach Anspruch 3, dadurch gekennzeichnet, daß der Stellkolben (52) zwei gegenläufig beaufschlagbare Wirkflächen (53; 54) aufweist, von denen die eine (53) über das eine Magnetventil (11) und die andere (54) über das andere Magnetventil (10) beaufschlagbar sind, und daß die beiden Wirkflächen (53; 54) unterschiedlich groß ausgebildet sind oder bei gleichgroßer Ausbildung zusätzlich eine den Stellkolben (52) belastende Stellfeder (55) vorgesehen ist.

5. Schaltventil nach Anspruch 3 oder 4, dadurch gekennzeichnet, daß die Querdrossel (16) am Stellkolben (52) nach Schieberbauart verwirklicht ist und eine mit Spiel in der Bohrung (51) verschiebbare Verdickung (62) für die Drosselfunktion in der ersten Position aufweist, an die sich eine Ausnehmung (63) für die Aufhebung der Drosselfunktion in der anderen Position anschließt (Figuren 2, 4).

6. Schaltventil nach Anspruch 3 oder 4, dadurch gekennzeichnet, daß die Querdrossel (16) am Stellkolben (52) nach Ventilbauart verwirklicht ist und im Stellkolben eine Drosselbohrung vorgesehen ist, über die in der Stellung Fahrt die beiden Anschlußstutzen für die Luftfederbälge miteinander verbunden sind, wobei zwischen dem Stellkolben und einem Gehäuserand ein Durchlaßventil gebildet ist (Figur 3).

## Claims

1. Pilot valve (1), connectable on the input side to a level-regulating valve (2) and electrically controllable, having the settings Raise, Lower, Travel and Stop, which pilot valve exhibits on a housing (17) a feed connection (8) for a compressed air source, a pressureless outlet (20) and at least two connecting sockets (21; 22) for the connection to air-suspension bellows (13; 15), there being provided in the housing, constructed as a slide and/or a valve, an inlet valve (40, 41), an outlet valve (25, 47) and a shut-off valve (27, 44) for the connection or disconnection of the line arrangements in the four settings, the valve body or bodies of which can be switched via two operating pistons (29, 30) and two solenoid valves (10, 11), connected upstream from these, into the four settings, the one connecting socket (21) being connectable to one or more air-suspension bellows of the left vehicle side and the other connecting socket (22) being connectable to one or more air-suspension bellows of the right vehicle side, characterised in that the pilot valve (1) is of single-circuit configuration as far as the Travel setting is concerned and in that in the housing (17) of the pilot valve (1), in a connecting line (50) between the two connecting sockets (21; 22) for the air-suspension bellows (13; 15), there is provided a fixed or switchable transverse throttle (16), the throttle function of which is active in the Travel setting and, where appropriate, additionally in the Stop setting.

2. Pilot valve according to Claim 1, characterised in that the transverse throttle (16) is disposed between a common feed line (49), running via the shut-off valve (25, 26, 28, 47), and the connecting line (50) between the two connecting sockets (21, 22) for the air-suspension bellows (13, 15).

3. Pilot valve according to Claim 1 and 2, characterised in that the transverse throttle (16) exhibits an adjusting piston (52), which is displaceable in a bore (51) in the housing (17) of the pilot valve (1) and which is designed to be controlled to move back and forth between a first position with throttle function in the Travel setting and a second position without throttle function in the Raise and Lower settings.

4. Pilot valve according to Claim 3, characterised in that the adjusting piston (52) exhibits two active surfaces (53; 54) which can be oppositely acted upon, the one (53) of which can be acted upon via the one solenoid valve (11) and the other (54) via the other solenoid valve (10), and in that the two active surfaces (53; 54) are of different-sized configuration or, if they are of equal-sized configuration, an adjusting spring (55) which places a load upon the adjusting piston (52) is additionally provided.

5. Pilot valve according to Claim 3 or 4, characterised in that the transverse throttle (16) is realised on the adjusting piston (52) in the manner of a slide and exhibits a thickening (62), displaceable with play in the bore (51), for the throttle function in the first position, which thickening is adjoined by a recess (63) for the suspension of the throttle function in the other position (Figures 2, 4).

6. Pilot valve according to Claim 3 or 4, characterised in that the transverse throttle (16) is realised on the adjusting piston (52) in the manner of a valve and in that in the adjusting piston there is provided a throttle bore, by which, in the Travel setting, the two connecting sockets for the air-suspension bellows are interconnected, a gate valve being formed between the adjusting piston and an edge of the housing (Figure 3).

## Revendications

1. Vanne de distribution (1) dont l'entrée peut être reliée à une vanne régulatrice de niveau (2) et pouvant être commandée électriquement, avec les positions de levée, descente, marche et arrêt, présentant sur un boîtier (17) un raccord d'alimentation (8) pour une source d'air comprimé, un évent (20) sans pression et au moins deux raccords (21; 22) pour la liaison avec des soufflets à coussins d'air (13; 15), tandis que dans le boîtier sont prévues, sous la forme de soupapes à tiroir et/ou à clapet, une soupape d'admission (40, 41), une soupape d'échappement (25, 47) et une soupape d'arrêt (27, 44) pour établir ou interrompre les circulations dans les conduites dans les quatre positions, le clapet de soupape pouvant être commuté dans les quatre positions par l'intermédiaire de deux pistons de distribution (29, 30) et de deux électrovannes (10, 11) disposées en amont de ceux-ci, tandis qu'un des raccords (21) peut être relié à un ou plusieurs soufflets à coussin d'air du côté gauche du véhicule et l'autre raccord (22) peut être relié à un ou plusieurs soufflets à coussin d'air du côté droit de véhicule,
**caractérisée** en ce que la vanne de distribution (1) est à un seul circuit en ce qui concerne la position de marche, et en ce qu'il est prévu dans le boîtier (17) de la vanne de distribution (1) dans une conduite de liaison (50) entre les deux raccords (21; 22) pour les soufflets à coussin d'air (13; 15) un étranglement transversal (16) permanent ou pouvant être mis en circuit, dont la fonction d'étranglement est active dans la position de marche, et éventuellement aussi dans la position d'arrêt.

2. Vanne de distribution selon la revendication 1, caractérisée en ce que l'étranglement transversal (16) est disposé entre une conduite d'admission commune (49) par l'intermédiaire de la soupape d'arrêt (25, 26, 28, 47) et la conduite de liaison (50) entre les deux raccords (21, 22) pour les soufflets à coussin d'air (13, 15).

3. Vanne de distribution selon les revendications 1 et 2, caractérisée en ce que l'étranglement transversal (16) présente un piston de réglage (52) coulissant dans un alésage (51) du boîtier (17) de la vanne de distribution (1), lequel piston est prévu pour être commandé selon un mouvement de va et vient entre une première position avec fonction d'étranglement dans la position de marche et une deuxième position sans fonction d'étranglement dans les positions de levée et de descente.

4. Vanne de distribution selon la revendication 3, caractérisée en ce que le piston de réglage (52) présente deux surfaces d'action (53; 54) pouvant être sollicitées en sens contraires, l'une d'elles (53) pouvant être sollicitée par une electrovanne (11) et l'autre (54) par l'autre électrovanne (10), et en ce que les deux surfaces d'action (53; 54) sont de grandeurs différentes, ou que dans le cas où elles sont de la même grandeur, il est prévu en outre un ressort de réglage (55) chargeant le piston de réglage (52).

5. Vanne de distribution selon la revendication 3 ou 4, caractérisée en ce que la soupape d'étranglement transversal (16) est réalisée à la manière d'un tiroir sur le piston de réglage (52) et présente un renflement (62) coulissant avec du jeu dans l'alésage (51) pour la fonction d'étranglement dans la première position, auquel renflement fait suite un évidement (63) pour la suppression de la fonction d'étranglement dans l'autre position (Figures 2, 4).

6. Vanne de distribution selon la revendication 3 ou 4, caractérisée en ce que la soupape d'étranglement transversal (16) est réalisée à la manière d'un clapet sur le piston de réglage (52) et en ce qu'il est prévu dans le piston de réglage une forure d'étranglement par laquelle, en position de marche, les deux raccords pour les soufflets à coussin d'air sont reliés l'un à l'autre, tandis qu'une soupape de passage est formée entre le piston de réglage et un rebord du boîtier (Figure 3).
